# EUROPEAN PATENT SPECIFICATION

(11) **EP 1 980 648 B1**
(45) Date of publication and mention of the grant of the patent: **15.09.2010**
(21) Application number: 06834397.9
(22) Date of filing: 11.12.2006
(51) Int. Cl.: C23C 26/00, B32B 15/08, F04B 27/08, F04B 39/00

(54) **SLIDE MEMBER**
GLEITELEMENT
ÉLÉMENT GLISSANT

(30) Priority: 30.01.2006 JP 2006021351
(43) Date of publication of application: 15.10.2008
(73) Proprietor: Sanden Corporation, Isesaki-shi, Gunma 372-8502 (JP)
(72) Inventor: KIKUCHI, Kiyoto, Isesaki-shi, Gunma 3728502 (JP)
(74) Representative: Prüfer & Partner GbR European Patent Attorneys
(86) International application number: PCT/JP2006/324642
(87) International publication number: WO 2007/086202

(56) References cited:
- JP-A- 2004 277 787
- JP-A- 2005 146 366
- US-A1- 2004 180 796

## Description

### Technical Field

The present invention relates to a slide member of a compressor, or the like.

### Background Art

Patent document 1 teaches a slide member comprising a base and a protective coat formed on the sliding surface side end surface of the base, wherein the protective coat comprises a resin middle layer made of heat resisting resin for middle layer, and a solid lubricant surface layer formed on the resin middle layer and made of a mixture of solid lubricant and heat resisting resin for surface layer.
Sticking resistance and wear resistance of the slide member of Patent document 1 are good.
Patent document 1: Japanese Patent Laid-Open Publication No.2005-146366

### Disclosure of Invention

### Problem to be solved

Thermal conductivity coefficient of resin is lower than that of metal. Therefore, the resin middle layer made of heat resisting resin for middle layer cannot rapidly dissipate frictional heat generated in the solid lubricant surface layer into the surroundings, thereby causing the sliding surface temperature to rise. Therefore, wear resistance of the slide member of Patent document 1 is very good, but sticking resistance of the slide member of Patent document 1 is not necessarily good.
An object of the present invention is to provide a slide member having a protective coat with good sticking resistance and wear resistance.

### Means for Solving the Problem

In accordance with the present invention, there is provided a slide member comprising a base and a protective coat formed on the sliding surface side end surface of the base, wherein the protective coat comprises a resin middle layer made of a mixture of fusible alloy, thermal conductive filler and heat resisting resin for middle layer, and a solid lubricant surface layer formed on the resin middle layer and made of a mixture of solid lubricant and heat resisting resin for surface layer.
The resin middle layer made of a mixture of fusible alloy, thermal conductive filler and heat resisting resin for middle layer has high thermal conductivity coefficient. Therefore, the resin middle layer can rapidly dissipate frictional heat generated in the solid lubricant surface layer into the surroundings. Therefore, sticking resistance and wear resistance of the protective coat of the slide member in accordance with the present invention are good.

### Effect of the Invention

The present invention provides a slide member having a protective coat with good sticking resistance and wear resistance.

### Best Mode for Carrying Out the Invention

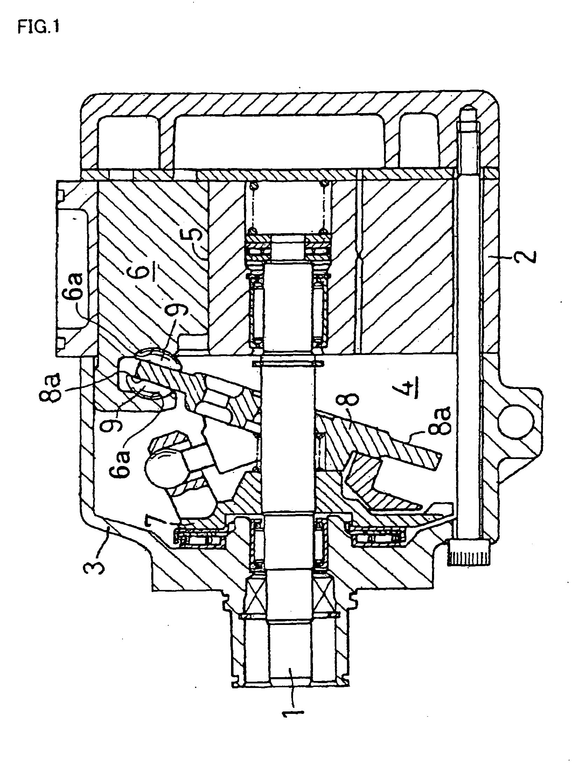

Preferred embodiments of the present invention applied to a swash plate compressor will be described.
As shown in Figure 1, a variable displacement swash plate compressor is provided with a driving shaft 1 accommodated in a crank chamber 4 formed by a cylinder block 2 and a front housing 3 and rotatably supported by the cylinder block 2 and the front housing 3 through bearings. A plurality of cylinder bores 5 are formed in the cylinder block 2 to surround the driving shaft 1. A piston 6 is inserted in each of the cylinder bores 5 to slide reciprocally. A rotor 7 is disposed in the crank chamber 4 to be connected to the driving shaft 1. A swash plate 8 engages the rotor 7 to be variable in inclination relative to the driving shaft 1. A pair of shoes 9 are slidably accommodated in a pair of semispherical seats 6a of the piston 6 to slidably clamp the outer peripheral portion 8a of the swash plate 8. Rotational movement transferred from an external power source to the driving shaft 1 is converted to reciprocal movement by the swash plate 8 to be transferred to the pistons 6. The pistons 6 reciprocally move in the cylinder bores 5 to compress gas in the cylinder bores 5.

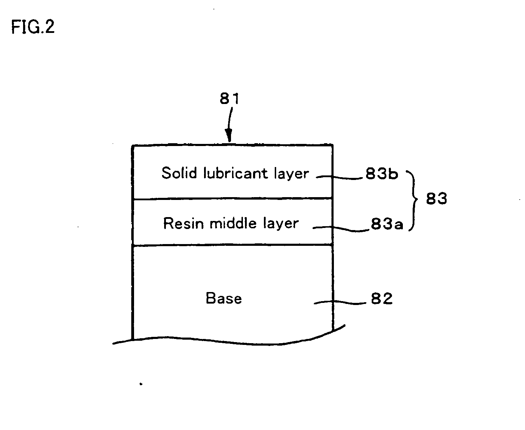

The outer peripheral portion 8a of the swash plate 8 forms a slide member 81 for slidably abutting the shoes 9. As shown in Figure 2, the slide member 81 formed by the outer peripheral portion 8a comprises a base 82 made of one selected from the group consisting of aluminum material, i.e. metal material containing aluminum as primary component, copper material, i.e., metal material containing copper as primary component, and magnesium material, i.e., metal material containing magnesium as primary component, and protective coats formed on the sliding surface side end surfaces of the base 82, i.e., both end surfaces of the base 82 opposite the pair of shoes 9. Each of the protective coats 83 comprises a resin middle layer 83a made of a mixture of fusible alloy, thermal conductive filler and heat resisting resin for middle layer, and a solid lubricant surface layer 83b formed on the resin middle layer 83a and in a first embodiment made of a mixture of solid lubricant and heat resisting resin for surface layer. Percentage content of the heat resisting resin in the solid lubricant surface layer 83b is set a level not exceeding that of the heat resisting resin in the resin middle layer 83a.

The resin middle layer 83a made of a mixture of heat resisting resin for middle layer, fusible alloy and thermal conductive filler has high thermal conductivity coefficient. Therefore, the resin middle layer 83 can rapidly dissipate frictional heat generated in the solid lubricant surface layer 83b slidably abutting the shoe 9 into the surroundings. Therefore, sticking resistance and wear resistance of the protective coat 83 provided on the slide member 81 formed by the outer peripheral portion 8a of the swash plate 8 are good.
Insertion of the resin middle layer 83a, whose percentage content of the heat resisting resin is higher than that of the solid lubricant surface layer 83b, between the solid lubricant surface layer 83b and the base 82 enhances adherence of the base 82 and the solid lubricant surface layer 83b to enhance separation resistance of the solid lubricant surface layer 83b. The solid lubricant surface layer 83b can be made in a second embodiment of a mixture of solid lubricant, heat resisting resin for surface layer, fusible alloy and thermal conductive filler. Thermal conductivity coefficient of the solid lubricant surface layer 83b increases. Therefore, frictional heat generated in the solid lubricant surface 83b slidably abutting the shoe 9 is rapidly dissipated into the surroundings.
When the heat resisting resin for middle layer is of the same kind as the heat resisting resin for surface layer, adherence of the resin middle layer 83a to the solid lubricant surface layer 83b is enhanced and the separation resistance of the solid lubricant surface layer 83b is further enhanced. Even if the heat resisting resin for middle layer is of a kind different from that of the heat resisting resin for surface layer, adherence of the resin middle layer 83a to the solid lubricant surface layer 83b can be kept good.

When half molten fusible alloy wherein solid phase metal and liquid phase metal are mixed is mixed with molten heat resisting resin for middle layer to form the coat of the resin middle layer 83a, heat conductivity of the resin middle layer 83a is further enhanced because the fusible alloy contacts or adheres to the thermal conductive fillers to connect them with each other, thereby forming a three dimensional thermal conduction circuit.

The heat resisting resin for middle layer is desirably such that heat deflection temperature defined by JISK7191 thereof is higher than or equal to 100°C.
The heat resisting resin for middle layer can be thermoplastic or thermosetting. Examples of the thermoplastic resin are polyphenylene sulfide(PPS), liquid crystal polymer, polyether ether ketone(PEEK), polyimide, polyether imide, polyacetal, polyether sulfone, polysulfone, polycarbonate, polyethylene terephthalate, polybutylene terephthalate, polyphenylene oxide, polyphthalamide, polyamide, polyamideimide, et. Examples of the thermosetting resin are phenolic resin, epoxy resin, unsaturated polyester resin, diallyl phthalate resin, melamine resin, urea resin, etc. Especially, polyphenylene sulfide(PPS) is desirable because viscosity thereof in molten condition is low to allow the fillers to easily disperse in it, thereby enabling the fillers to be charged in it densely. It is necessary to charge the fillers in the resin middle layer 83a densely in order to enhance thermal conductivity coefficient of the resin middle layer 83a. However, dense charge of the fillers causes increase of the viscosity to increase difficulty of production. When polyphenylene sulfide is used, increase of viscosity is prevented and difficulty of production is mitigated.
The resin middle layer 83a is desirably 0.1 to 100 µm thick to reliably enhance sticking resistance and wear resistance.
Considering cost performance, wear resistance and thermal resistance, the heat resisting resin for surface layer is desirably polyamideimide resin, polyimide resin, epoxy resin or phenolic resin.

The solid lubricant is desirably at least one selected from the group consisting of molybdenum disulfide, graphite and fluorine compound. The molybdenum disulfide enhances primarily sticking resistance under the dry condition. The graphite enhances primarily sticking resistance and wear resistance under the oil lubrication. The fluorine compound decreases friction coefficient to enhance sticking resistance and wear resistance. Examples of the fluorine compound are polytetrafluoroethylene(PTFE), ethylentetrafluoroethylene(ETFE), tetrafluoroethlene hexafluoropropylene copolymer(FEP), etc. Mean primary particle size of the molybdenum disulfide is 0.1 to 40 µm, and desirably 1 to 10 µm in order to enhance wear resistance. Mean primary particle size of the graphite is 0.1 to 10 µm, and desirably 1 to 5 µm in order to enhance mutual adhesion of components. Mean primary particle size of the fluorine compound is 0.1 to 5 µm, and desirably 1 to 3 µm. When mean primary particle size of the fluorine compound is less than 0.1 µm, sticking resistance decreases. When mean primary particle size of the fluorine compound is larger than 5 µm, wear resistance decreases.

The solid lubricant surface layer 83b can further contain one or all of the additive agents for surface layer such as hard solid particles, extreme- pressure agent, surface active agent, silane coupling agent, processing stabilizer and antioxidant. It is possible for the resin middle layer 83a to contain one or all of the additive agents for middle layer such as hard solid particles, extreme-pressure agent, surface active agent, silane coupling agent, processing stabilizer, antioxidant and solid lubricant, and the percentage content of the additive agents for middle layer does not exceed the sum of the percentage content of the solid lubricant and the additive agents for the surface layer. For example, percentage content of the solid lubricant and additive agents for surface layer in the solid lubricant surface layer 83b is 50 volume % and 5 volume % respectively and percentage content of the additive agents for middle layer in the resin middle layer 83a is 55 volume %. It is possible for the resin middle layer 83a not to contain any one of the additive agents for middle layer such as solid particle, extreme- pressure agent, surface active agent, silane coupling agent, processing stabilizer, antioxidant and solid lubricant.

The fusible alloy is at least one selected from the group consisting of Sn-Cu, Sn-Al, Sn-Zn, Sn-Pt, Sn-Mn, Sn-Mg, Sn-Ag, Sn-Au, Al-Li, and Zn-Li. Desirably, liquidus curve temperature of the fusible alloy is lower than or equal to 400°C. Therefore, the fusible alloy is desirably at least one selected from the group consisting of Sn-Cu, Sn-Al, Sn-Zn, Sn-Pt, Sn-Mn, Sn-Ag, Al-Li and Zn-Li. Selection of these materials increases freedom of selection of resin to be mixed with them. More desirably, the fusible alloy is at least one selected from the group consisting of Sn-Cu, Sn-Al and Sn-Zn. These materials can be obtained easily and inexpensively. Further more desirably, the fusible alloy is Sn-Cu. Fusion point of Sn-Cu alloy can be selected widely and thermal conductivity coefficient of Sn-Cu alloy is high.

The thermal conductive filler, is a mixture of copper powder and graphite powder.
The copper powder and the graphite powder can be added to the raw material powder of the heat resisting resin independently. Compound powder of copper and graphite can be added to the raw material powder of the heat resisting resin.
The compound powder of copper and graphite can be graphite powder coated with copper powder by soldering, electrolytic plating, electroless plating, etc., or graphite powder compounded with copper powder by mechanical alloying. Particle size of copper and graphite compound powder is desirably 1 to 150 µm. When particle size is less than 1 µm or larger than 150 µm, the compound powder cannot easily disperse in the resin. Thermal conductivity coefficient of copper is relatively high among those of various kinds of metals and specific gravity is relatively large among those of various kinds of metals. Therefore, powder filler with small specific gravity and high thermal conductivity coefficient can be obtained by compounding copper powder with graphite powder, specific gravity thereof being small. Although copper is liable to be oxidized, graphite is not liable to be oxidized. Therefore, degradation of thermal conductivity coefficient of the compound powder is prevented. Powder filler comprising graphite powder plated with copper powder is not liable to be effected by ductility of copper because copper is plated on the graphite.

Percentage content of the thermal conductive filler in the resin middle layer 83a is desirably 10 to 55 volume % ,further desirably 15 to 45 volume % and most desirably 15 to 40 volume %. When percentage content of the thermal conductive filler is less than 10 volume %, thermal conductivity of the resin middle layer 83a decreases. When percentage content of the thermal conductive filler is larger than 55 volume %, moldability and workability of the resin middle layer 83a decreases. When compound filler of copper powder and graphite powder is used, percentage content of the graphite powder is desirably 5 to 40 volume %.
Graphite fiber used for thermal conductive filler may be made of primarily cellulose material, PAN material, or pitch material. Graphite fiber used for thermal conductive filler may be made by the vapor phase epitaxy method. Some kinds of graphite fillers have higher thermal conductivity coefficient than inorganic fillers such as metal fillers, metal oxide fillers, etc. Characteristic of graphite fiber are good in thermal conductivity coefficient in the longitudinal direction, but not so good in thermal diffusion and heat radiation. When graphite fiber fillers and inorganic fillers are compounded, inorganic fillers are connected with each other by graphite fiber fillers to form a three dimensional thermal conduction circuit, thereby enhancing thermal diffusion and heat radiation of the resin middle layer 83a. Graphite fiber fillers are also connected with each other by fusible alloy to form a three dimensional thermal conduction circuit, thereby enhancing thermal diffusion and heat radiation of the resin middle layer 83a.
Coefficient of thermal conductivity of graphite fiber in the longitudinal direction is not less than 100W/mK, and desirably not less than 700/mK. Diameter of graphite fiber is 1 to 35 µm, and desirably 5 to 20 µm. Length of graphite fiber is 5 to 100 µm, and desirably 20 to 80 µm. When diameter of graphite fiber is less than 1 µm, the graphite fiber becomes powder and becomes hard to treat. When diameter of graphite fiber is larger than 35 µm, the graphite fiber becomes liable to be crushed when it is mixed with resin.
Percentage content of the graphite fiber in the resin middle layer 83a is desirably 1 to 20 volume % and further desirably 5 to 15 volume % and most desirably 5 to 10 volume %. When percentage content of the graphite fiber is less than 1 volume %, thermal conductivity of the resin middle layer 83a cannot be enhanced adequately. When percentage content of the graphite fiber is larger than 20 volume %, moldability and workability of the resin middle layer 83a decreases.

Ratio of the volume percentage content of the fusible alloy to the volume percentage content of the thermal conductive filler(fusible alloy/thermal conductive filler) is desirably 1/30 to 3/1 and further desirably 1/30 to 1/1 and most desirably 1/30 to 5/7. When the aforementioned ratio is less than 1/30, thermal conductivity of the resin middle layer 83a decreases due to shortage of fusible alloy for connecting thermal conductive fillers with each other. When the aforementioned ratio is larger than 3/1, content of the fusible alloy, whose thermal conductivity coefficient is smaller than that of thermal conductive filler, increases to decrease thermal conductivity coefficient of the resin middle layer 83a.

The sliding surface side end surface of the base 82 can be treaded with plating, thermal spraying, anodic oxidation, chemical finishing or roughing. The aforementioned surface treatment increases adhesiveness of the resin middle layer 83a to increases sticking resistance and wear resistance of the sliding surface. Examples of the plating are tin plating, Ni plating, Cu plating, etc. Examples of the thermal spraying are Cu thermal spraying, Al-Si thermal spraying, etc. Examples of the anodic oxidation are anodic oxide coating for aluminum material, etc. Examples of the chemical finishing are chromate treatment, non-chromate treatment, zinc phosphate treatment, etc. Examples of the roughing are shot blast treatment, Tufftride process treatment, etc. The aforementioned surface treatments increase adhesiveness of the resin middle layer 83a and also enable the slide member to slide even if the solid lubricant surface layer 83b and resin middle layer 83a are worn away.

### Industrial Applicability

The present invention can be applied to various kinds of slide members of various kinds of compressors, such as portions of swash plates slidably abutting shoes, swash plates, shoes and pistons of swash plate compressors, sliding bearings for supporting driving shafts of various kinds of compressors, etc.

### BRIEF DESCRIPTION OF THE DRAWINGS

Figure 1 is a sectional view of a swash plate compressor comprising slide members in accordance with a preferred embodiment of the present invention.
Figure 2 is a sectional view of a slide member in accordance with a preferred embodiment of the present invention.

### BRIEF DESCRIPTION OF THE REFERENCE NUMERALS

1 Driving shaft
2 Cylinder block
3 Front housing
4 Crank chamber
5 Cylinder bore
6 Piston
6a Semi spherical seat
7 Rotor
8 Swash plate
8a Outer peripheral portion
9 Shoe
81 Slide member
82 Base
83 Protective coat
83a Resin middle layer
83b Solid lubricant surface layer

## Claims

1. A slide member comprising a base (82) and a protective coat formed on the sliding surface side end surface of the base, wherein the protective coat comprises a resin middle layer (83a) made of a mixture of fusible alloy, thermal conductive filler and heat resisting resin for middle layer, and a solid lubricant surface layer (83b) formed on the resin middle layer and made of a mixture of solid lubricant and heat resisting resin for surface layer,
wherein,
the percentage content of the heat resisting resin in the resin middle layer (83a) is higher than that of the solid lubricant layer (83b), the fusible alloy is at least one selected from the group consisting of Sn-Cu, Sn-Al, Sn-Zn, Sn-Pt, Sn-Mn, Sn-Mg, Sn-Ag, Sn-Au, Al-Li and Zn-Li, the heat resisting resin for surface layer is at least one selected from the group consisting of polyamideimide resin, polyimide resin, epoxy resin and phenolic resin, the thermal conductive filler is a mixture of copper powder and graphite powder, the heat resisting resin for middle layer is of the same kind as the heat resisting resin for surface layer, and the solid lubricant is at least one selected from the group consisting of molybdenum disulfide, graphite and fluorine compound.

2. A slide member comprising a base (82) and a protective coat formed on the sliding surface side end surface of the base, wherein the protective coat comprises a resin middle layer (83a) made of a mixture of fusible alloy, thermal conductive filler and heat resisting resin for middle layer, and a solid lubricant surface layer (83b) formed on the resin middle layer and made of a mixture of solid lubricant, heat resisting resin for surface layer, fusible alloy and thermal conductive filler,
wherein
the percentage content of the heat resisting resin in the resin middle layer (83a) is higher than that of the solid lubricant surface layer (83b), the fusible alloy is at least one selected from the group consisting of Sn-Cu, Sn-Al, Sn-Zn, Sn-Pt, Sn-Mn, Sn-Mg, Sn-Ag, Sn-Au, Al-Li and Zn-Li, the heat resisting resin for surface layer is at least one selected from the group consisting of polyamideimide resin, polyimide resin, epoxy resin and phenolic resin, the thermal conductive filler is a mixture of copper powder and graphite powder, the heat resisting resin for middle layer is of the same kind as the heat resisting resin for surface layer, and the solid lubricant is at least one selected from the group consisting of molybdenum disulfide, graphite and fluorine compound.

3. A slide member according to claim 1 or 2, wherein heat deflection temperature of the heat resisting resin for middle layer is higher than or equal to 100° C.

4. A slide member of any one of claims 1 to 3, wherein the resin middle layer is 0,1 to 100 µm thick.

5. A slide member of any one of claims 1 to 4, wherein the base is made of at least one selected from the group consisting of aluminum material, iron material, copper material and magnesium material.

6. A slide member of any one of claims 1 to 5, wherein the sliding surface side end surface of the base is treaded with at least one selected from the group consisting of metal plating, thermal spraying, sintering, anodic oxidation, chemical finishing and roughing.

7. A compressor comprising a slide member of any of claims 1 to 6.

## Patentansprüche

1. Gleitelement, das eine Basis (82) und eine Schutzschicht aufweist, die auf der gleitoberflächenseitigen Endoberfläche der Basis gebildet ist, wobei die Schutzschicht eine Harzmittelschicht (83a), die aus einer Mischung von einer schmelzbaren Legierung, einem thermisch leitenden Füller und einem hitzebeständigem Harz für eine Mittelschicht hergestellt ist, und eine feste Schmiermittel-Oberflächenschicht (83b) aufweist, die auf der Harzmittelschicht gebildet ist und aus einer Mischung eines festen Schmiermittels und eines hitzebeständigen Harzes für eine Oberflächenschicht hergestellt ist, wobei
der prozentuale Inhalt des hitzebeständigen Harzes in der Harzmittelschicht (83a) höher als der der festen Schmiermittelschicht (83b) ist, die schmelzbare Legierung zumindest eines, ausgewählt aus der Gruppe, die aus Sn-Cu, Sn-Al, Sn-Zn, Sn-Pt, Sn-Mn, Sn-Mg, Sn-Ag, Sn-Au, Al-Li und Zn-Li besteht, ist, das hitzebeständige Harz für eine Oberflächenschicht zumindest eines, ausgewählt aus der Gruppe, die aus Polyamidimidharz, Polyimidharz, Epoxidharz und Phenolharz besteht, ist, der thermisch leitende Füller eine Mischung aus einem Kupferpulver und einem Grafitpulver ist, das hitzebeständige Harz für eine Mittelschicht aus der selben Art wie das hitzebeständige Harz für eine Oberflächenschicht ist, und der feste Schmierstoff zumindest aus einem, ausgewählt aus der Gruppe, die aus Molybdendisulfid, Graphit und einer Fluorverbindung besteht, ist.

2. Gleitelement, das eine Basis (82) und eine Schutzschicht aufweist, die auf der gleitoberflächenseitigen Endoberfläche der Basis gebildet ist, wobei die Schutzschicht eine Harzmittelschicht (83a), die aus einer Mischung von einer schmelzbaren Legierung, einem thermisch leitenden Füller und einem hitzebeständigem Harz für eine Mittelschicht hergestellt ist, und eine feste Schmiermittel-Oberflächenschicht (83b) aufweist, die auf der Harzmittelschicht gebildet ist und aus einer Mischung eines festen Schmiermittels, eines hitzebeständigen Harzes für eine Oberflächenschicht, einer schmelzbaren Legierung und einem thermisch leitendem Füller hergestellt ist,
wobei
der prozentuale Inhalt des hitzebeständigen Harzes in der Harzmittelschicht (83a) höher als der der festen Schmiermittel-Oberflächenschicht (83b) ist, die schmelzbare Legierung zumindest eines, ausgewählt aus der Gruppe, die aus Sn-Cu, Sn-Al, Sn-Zn, Sn-Pt, Sn-Mn, Sn-Mg, Sn-Ag, Sn-Au, Al-Li und Zn-Li besteht, ist, das hitzebeständige Harz für eine Oberflächenschicht zumindest eines, ausgewählt aus der Gruppe, die aus Polyamidimidharz, Polyimidharz, Epoxidharz und Phenolharz besteht, ist, der thermisch leitende Füller eine Mischung aus einem Kupferpulver und einem Graphitpulver ist, das hitzebeständige Harz für eine Mittelschicht von der selben Art wie das hitzebeständige Harz für eine Oberflächenschicht ist, und der feste Schmierstoff zumindest einer, ausgewählt aus der Gruppe, die aus Molybdendisulfid, Graphit und einer Fluorverbindung besteht, ist.

3. Gleitelement gemäß Anspruch 1 oder 2, wobei eine Wärmeablenktemperatur des hitzebeständigen Harzes für eine Mittelschicht höher als oder gleich 100° C ist.

4. Gleitelement gemäß einem der Ansprüche 1 bis 3, wobei die Harzmittelschicht 0,1 bis 100 µm dick ist.

5. Gleitelement gemäß einem der Ansprüche 1 bis 4, wobei die Basis aus zumindest einem, ausgewählt aus der Gruppe, die aus einem Aluminiummaterial, einem Eisenmaterial, einem Kupfermaterial und einem Magnesiummaterial besteht, hergestellt ist.

6. Gleitelement gemäß einem der Ansprüche 1 bis 5, wobei die gleitoberflächenseitige Endoberfläche der Basis mit zumindest einem, ausgewählt aus der Gruppe, die aus einem Galvanisieren, einem thermischen Spritzen, einem Sintern, einer anodischen Oxidation, einer chemischen Endbearbeitung und Vorbearbeitung, behandelt ist.

7. Kompressor, der ein Gleitelement entsprechend einem der Ansprüche 1 bis 6 aufweist.

## Revendications

1. Elément glissant comportant une base (82) et un revêtement de protection formé sur la surface d'extrémité du côté de la surface de glissement de la base,
dans lequel
le revêtement protecteur comprend une couche intermédiaire de résine (83a) formée d'un mélange d'un alliage fusible, d'une charge thermoconductrice et d'une résine résistant à la chaleur pour la couche intermédiaire, et
une couche de surface à lubrifiant solide (83b) formée sur la couche intermédiaire de résine, et composée d'un mélange d'un lubrifiant solide et d'une résine résistant à la chaleur pour la couche de surface, élément glissant dans lequel
- la teneur en pourcentage de résine résistant à la chaleur dans la couche intermédiaire de résine (83a), est supérieure à la celle de la couche de lubrifiant solide (83b),
- l'alliage fusible est au moins l'un des éléments choisis dans le groupe comprenant : Sn-Cu, Sn-Al, Sn-Zn, Sn-Pt, Sn-Mn, Sn-Mg, Sn-Ag, Sn-Au, Al-Li et Zn-Li,
- la résine résistant à la chaleur de la couche de surface est au moins l'une des résines choisies dans le groupe comprenant : une résine de polyamide imide, une résine de polyimide, une résine époxy et une résine phénolique,
- la charge thermoconductrice est un mélange de poudre de cuivre et de poudre de graphite,
- la résine résistant à la chaleur dans la couche intermédiaire est du même type que la résine résistant à la chaleur de la couche de surface, et
- le lubrifiant solide est au moins l'un des éléments choisis dans le groupe comprenant le bisulfure de molybdène, le graphite et des composants fluorés.

2. Elément glissant comprenant :
une base (82) et un revêtement protecteur formés sur la surface d'extrémité du côté de la surface de glissement de la base,
- le revêtement protecteur comportant une couche intermédiaire de résine (83a) formée d'un mélange d'un alliage fusible, d'une charge thermoconductrice et d'une résine résistant à la chaleur pour la couche intermédiaire, et d'une couche de surface de lubrifiant solide (83b) formée sur la couche intermédiaire de résine et comprenant un mélange de lubrifiant solide, de résine résistant à la chaleur pour la couche de surface, d'un alliage fusible et d'une charge thermoconductrice,
élément dans lequel
- le pourcentage de la résine résistant à la chaleur dans la couche intermédiaire de résine (83a) est supérieur à celui de la couche de surface de lubrifiant solide (83b),
- l'alliage fusible est au moins l'un des éléments choisis dans le groupe comprenant Sn-Cu, Sn-Al, Sn-Zn, Sn-Pt, Sn-Mn, Sn-Mg, Sn-Ag, Sn-Au, Al-Li et Zn-Li,
- la résine résistant à la chaleur pour la couche de surface est au moins l'une des résines choisies dans le groupe comprenant une résine de polyamide imide, une résine polyimide, une résine époxy et une résine phénolique,
- la charge thermoconductrice est un mélange de poudre de cuivre et de poudre de graphite,
- la résine résistant à la chaleur pour la couche intermédiaire est du même type que la résine résistant à la chaleur pour la couche de surface, et
- le lubrifiant solide est au moins l'un des éléments choisis dans le groupe comprenant le bisulfure de molybdène, le graphite et les composants fluorés.

3. Elément glissant selon la revendication 1 ou 2,
dans lequel
la température de déflexion de chaleur de la résine résistant à la température pour la couche intermédiaire est supérieure ou égale à 100°C.

4. Elément glissant selon l'une des revendications 1 à 3,
**caractérisé en ce que**
la couche intermédiaire de résine, a une épaisseur comprise entre 0,1 et 100 µm.

5. Elément glissant selon l'une des revendications 1 à 4,
**caractérisé en ce que**
la base est faite d'au moins un élément choisi dans le groupe composé de l'aluminium, du fer, du cuivre et du magnésium.

6. Elément glissant selon l'une des revendications 1 à 5,
**caractérisé en ce que**
la surface d'extrémité du côté de la surface de glissement de la base est traitée avec au moins l'un des éléments choisis dans le groupe comprenant le plaquage de métal, la pulvérisation thermique, le frittage, l'oxydation anodique, la finition chimique et le traitement de rugosité.

7. Compresseur comportant un élément glissant selon l'une des revendications 1 à 6.
